# EUROPEAN PATENT APPLICATION

(11) **EP 2 426 170 A1**
(43) Date of publication of application: **07.03.2012**
(21) Application number: 10769658.5
(22) Date of filing: 22.04.2010
(51) Int. Cl.: C08L 21/00, C08J 3/20, C08K 5/00, B60C 1/00

(54) **DISPERSION LIQUID OF CHEMICAL FOR RUBBERS, METHOD FOR PRODUCING SAME, RUBBER WET MASTER BATCH CONTAINING CHEMICAL FOR RUBBERS, RUBBER COMPOSITION, AND TIRE**

(30) Priority: 28.04.2009 JP 2009109571
(71) Applicant: Bridgestone Corporation, Tokyo 104-8340 (JP)
(72) Inventor: NAKAYAMA, Atsushi, Kodaira-shi Tokyo 187-8531 (JP); KASAI, Takeshi, Kodaira-shi Tokyo 187-8531 (JP); IZUCHI, Masaaki, Kodaira-shi Tokyo 187-8531 (JP); NISHIURA, Fumiteru, Kodaira-shi Tokyo 187-8531 (JP)
(74) Representative: Lamb, Martin John Carstairs
(86) International application number: PCT/JP2010/057116
(87) International publication number: WO 2010/125959

(57) **Abstract**

The present invention provides: a white turbid dispersion liquid of a chemical for rubber, containing the chemical for rubber at a concentration of 1% by mass or more; a method for producing the white turbid dispersion liquid of a chemical for rubber, containing mixing a solution containing a chemical for rubber dissolved in a good solvent for the chemical for rubber, with a poor solvent for the chemical for rubber; and a wet master batch containing a chemical for rubber, containing a liquid mixture containing the white turbid dispersion liquid of a chemical for rubber, and a rubber latex, or a rubber latex and a filler slurry, the liquid mixture being coagulated, and thus provides: the dispersion liquid of a chemical for rubber that is for making various chemicals for rubber be contained in a rubber wet master batch with good dispersibility; the method for producing the same; and the rubber master batch that provides a rubber composition enhanced in thermal aging resistance, reinforcing property, elastic modulus, wear resistance and the like.

## Description

### Technical Field

The present invention relates to a white turbid dispersion liquid of a chemical for rubber, a method for producing the same, a wet master batch containing a chemical for rubber using the dispersion liquid, a rubber composition containing the wet master batch, and a tire. More specifically, the present invention relates to a white turbid dispersion liquid of a chemical for rubber that is for making various chemicals for rubber be contained in a rubber wet master batch with good dispersibility, an effective method for producing the same, a wet master batch containing a chemical for rubber that provides a rubber composition enhanced in thermal aging resistance, reinforcing property, elastic modulus, wear resistance and the like, a rubber composition having the aforementioned performance containing the rubber wet master batch, and a tire containing the same.

### Background Art

It has been generally known that an antioxidant is added to a wet master batch for preventing deterioration during storage thereof (see, for example, Patent Documents 1 and 2).
Upon addition of an antioxidant to a wet master batch, such a method has been employed that an antioxidant is added to a latex, as similar to a method ordinarily employed for synthetic rubber. In this case, the latex may be precipitated and coagulated or partially coagulated when the antioxidant is mixed as it is therein, and thus the antioxidant is generally used in the form of an emulsion by adding a surfactant thereto.
Patent Document 3 discloses that a rubber additive (chemical) is mixed in a carbon black slurry of a wet master batch. However, there is no specific dispersing method disclosed, and what is only disclosed as the example is that the chemical is added as an emulsion to a latex in advance (see, for example, paragraphs [0055], [0064] and [0095]).

However, when a latex having an antioxidant added as an emulsion thereto according to the ordinary methods is mixed with a slurry solution of a filler, the surfactant is adsorbed on the surface of the filler, thereby reducing the surface activity of the filler, and the phenomenon provides a problem that the mutual interaction between the filler and the rubber is impaired, and the rubber may be deteriorated in reinforcing property and wear resistance. Furthermore, the antioxidant has insufficient dispersibility, and it is difficult to enhance the thermal antiaging property.
Patent Document 4 discloses, on the other hand, that an antioxidant is dispersed upon production of a carbon black slurry by applying a high shearing force without the use of a surfactant, and the slurry is then coagulated with a latex. In this method, however, the antioxidant may be difficult to be entrained sufficiently into the wet master batch, which results consequently in that the content of the antioxidant may largely fluctuate within one production lot, and when the master batch is left at rest, the Mooney viscosity may be decreased. Thus, the method may not be satisfactory.
Accordingly, there has been no disclosure about a method of highly dispersing a chemical for rubber in a wet master batch, in the ordinary techniques relating to a wet master batch.

### Citation List

### Patent Literature

Patent Document 1: JP-B-54-10576
Patent Document 2: JP-B-51-43851
Patent Document 3: JP-T-2001-518401
Patent Document 4: JP-A-2006-213842

### Summary of Invention

### Technical Problems

Under the circumstances, an object of the present invention is to provide a dispersion liquid of a chemical for rubber that is for making various chemicals for rubber be contained in a rubber master batch with good dispersibility, an effective method for producing the same, a rubber wet master batch that provides a rubber composition enhanced in thermal aging resistance, reinforcing property, elastic modulus, wear resistance and the like, a rubber composition having the aforementioned performance containing the rubber wet master batch, and a tire containing the same.

### Solution to Problems

As a result of earnest investigations made by the inventors for achieving the object, it has been found that a white turbid dispersion liquid of a chemical for rubber containing the chemical for rubber at a certain concentration or more may make the chemical for rubber be contained in a rubber wet master batch with good dispersibility, and the white turbid dispersion liquid of a chemical for rubber may be obtained by mixing a solution containing the chemical for rubber dissolved in a good solvent, with a poor solvent for the chemical for rubber.
Furthermore, it has also be found that a rubber wet master batch that provides a rubber composition enhanced in thermal aging resistance, reinforcing property, elastic modulus, wear resistance and the like may be obtained by coagulating a liquid mixture containing the white turbid dispersion liquid of a chemical for rubber, and a rubber latex, or a rubber latex and a filler slurry.
The invention has been completed based on the findings.

Accordingly, the present invention provides:
[1] a white turbid dispersion liquid of a chemical for rubber, containing the chemical for rubber at a concentration of 1% by mass or more,
[2] the white turbid dispersion liquid of a chemical for rubber according to the item [1], wherein 80% by mass or more of the chemical for rubber is dispersed in a form of particles,
[3] the white turbid dispersion liquid of a chemical for rubber according to the item [1] or [2], wherein particles of the chemical for rubber in the dispersion liquid have a volume average particle diameter of from 0.4 to 20 µm,
[4] the white turbid dispersion liquid of a chemical for rubber according to any one of the items [1] to [3], wherein the content of the chemical for rubber is from 1 to 60% by mass,
[5] the white turbid dispersion liquid of a chemical for rubber according to any one of the items [1] to [4], wherein the chemical for rubber is at least one selected from an antioxidant, wax, stearic acid and a resin,
[6] a method for producing the white turbid dispersion liquid of a chemical for rubber according to any one of the items [1] to [5], containing mixing a solution containing a chemical for rubber dissolved in a good solvent for the chemical for rubber, with a poor solvent for the chemical for rubber,
[7] a rubber wet master batch containing a chemical for rubber, obtained by coagulating a liquid mixture containing the white turbid dispersion liquid of a chemical for rubber according to any one of the items [1] to [5], and a rubber latex, or a rubber latex and a filler slurry,
[8] the rubber wet master batch containing a chemical for rubber according to the item [7], wherein the coagulated liquid mixture is dried,
[9] a rubber composition containing the rubber wet master batch containing a chemical for rubber according to the item [8], and
[10] a tire containing the rubber composition according to the item [9].

### Advantageous Effects of Invention

(1) According to the present invention, a white turbid dispersion liquid of a chemical for rubber is provided that is for making various chemicals for rubber, preferably at least one selected from an antioxidant, wax, stearic acid and a resin, be contained in a rubber wet master batch with good dispersibility.
(2) In the case where, in the dispersion liquid, 80% by mass or more of the total chemical for rubber contained therein is dispersed in the form of particles, or particles of the chemical for rubber in the dispersion liquid have a volume average particle diameter of from 0.4 to 20 µm, in particular, the chemical for rubber may be dispersed in the rubber wet master batch with better dispersibility.
(3) According to the method of the present invention, the white turbid dispersion liquid of a chemical for rubber may be produced with good efficiency.
(4) According to the method of the present invention, furthermore, it is not necessary for various chemicals for rubber to be formed into an emulsion upon producing the white turbid dispersion liquid of a chemical for rubber, which means that there is no need to use a surfactant. Therefore, the activity of the filler, which is mixed in the rubber composition containing the rubber wet master batch containing a chemical for rubber obtained with the white turbid dispersion liquid of a chemical for rubber, may not be deteriorated.
(5) According to the present invention, a rubber wet master batch containing a chemical for rubber that provides a rubber composition enhanced in thermal aging resistance, reinforcing property, elastic modulus, wear resistance and the like, and a rubber composition having the aforementioned performance containing the rubber wet master batch, and a tire containing the same are provided.

### Description of Embodiments

The white turbid dispersion liquid of a chemical for rubber of the present invention will be described.

### White Turbid Dispersion Liquid of Chemical for Rubber Properties

The white turbid dispersion liquid of a chemical for rubber of the present invention is a dispersion liquid that contains a chemical for rubber at a concentration of 1% by mass or more, preferably from 1 to 60% by mass, more preferably from 1 to 40% by mass, and further preferably from 3 to 40% by mass, and exhibits white turbidity. The white turbidity referred herein means that exhibition of white turbidity under visual observation. The white turbidity shows that a part or the whole of the chemical for rubber contained in the dispersion liquid is dispersed in the form of particles.
In the white turbid dispersion liquid of a chemical for rubber of the present invention, it is preferred that 80% by mass or more of the total chemical for rubber contained therein is dispersed in the form of particles, and it is more preferred that 90% by mass or more thereof is dispersed in the form of particles, from the standpoint of the high dispersibility of the chemical for rubber in the wet master batch. The measurement method of the ratio of the chemical for rubber that is dispersed in the form of particles with respect to the total chemical for rubber will be described later.
In the white turbid dispersion liquid of a chemical for rubber of the present invention, the particles of the chemical for rubber in the dispersion liquid have a volume average particle diameter (mv) of from 0.4 to 20 µm, and more preferably from 0.7 to 15 µm, from the standpoint of the good dispersibility in the wet master batch. The measurement method of the volume average particle diameter (mv) will be described later.

### Chemical for Rubber

The chemical for rubber in the white turbid dispersion liquid of a chemical for rubber of the present invention is not particularly limited, and at least one selected from an antioxidant, wax, stearic acid and a resin may be preferably used.

### Antioxidant

Examples of the antioxidant used in the present invention include an antioxidant such as an amine series, a quinoline series, a phenol series, an organic phosphite series and a thioether series.
Examples of the amine series antioxidant include N-(1,3-dimethylbutyl)-N'-phenyl-p-phenylenediamine, N-phenyl-N'-isopropyl-p-phenylenediamine, alkylated diphenylamine, 4,4'-(α,α-dimethylbenzyl)diphenylamine, N-phenyl-N'-(3-methacryloyloxy-2-hydroxypropyl)-p-phenylenediamine, N-(1-methylheptyl)-N'-phenyl-p-phenylenediamine, phenyl-α-naphthylamine, octylated diphenylamine and a derivative thereof, N,N'-diphenyl-p-phenylenediamine, N,N'-diallyl-p-phenylenediamine and N,N'-di-β-naphthyl-p-phenylene diamine.
Examples of the quinoline series antioxidant include a polymer of 2,2,4-trimethyl-1,2-dihydroquinoline, 6-ethoxy-2,2,4-trimethyl-1,2-dihydroquinoline and 6-dodecyl-2,2,4-trimethyl-1,2-dihydroquinoline.

Examples of the phenol series antioxidant include styrenated phenol, mixed butyl octyl phenol, 2,6-di-t-butyl-p-cresol, 2,6-diphenyl-4-octoxyphenol, stearyl-(3,5-dimethyl-4-hydroxybenzyl) thioglycolate, stearyl-3-(4-hydroxy-3,5-di-t-butylphenyl) propionate, distearyl-3,5-di-t-butyl-4-hydroxybenzyl phosphonate, triethylene glycol bis[β-(3-t-butyl-4-hydroxy-5-methylphenyl) propionate], 3,9-bis[1,1-dimethyl-2-[β-(3-t-butyl-4-hydroxy-5-methylphenyl)propyonyloxy]ethyl]-2,4,8,10-tetraoxa-spiro[5.5]undecane, 2,2'-methylenebis(4-methyl-6-t-butylphenol), 2,2'-methylenebis(4-ethyl-6-t-butylphenol), 2,2'-methylidenebis(4,6-di-t-butylphenol), 2,2'-ethylidenebis(4-sec-butyl-6-t-butylphenol), bis[3,5-bis(4-hydroxy-3-t-butylphenyl)butyric acid] glycol ester, 4,4'-butylidenebis(6-t-butyl-m-cresol), 4,4'-thiobis(6-t-butyl-m-cresol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 2-t-butyl-4-methyl-5-(2-hydroxy-3-t-butyl-5-methylbenzyl) phenylacrylate, 1,3,5-tris(2,6-dimethyl-3-hydroxy-4-t-butylbenzyl) isocyanurate, 1,3,5-tris(3,6-di-t-butyl-4-hydroxybenzyl) isocyanurate, 1,3,5-tris(3,5-di-t-butyl-4-hydroxybenzyl)-2,4,6-trimethyl benzene, 1,3,5-tris[β-(3,5-di-t-butyl-4-hydroxyphenyl)propionyloxyl ] isocyanurate and tetrakis[methylene-β-(3,5-di-t-butyl-4-hydroxyphenyl) propionate]methane.

Examples of the organic phosphite series antioxidant include triphenyl phosphite, tris(nonylphenyl) phosphite, tris(mono-di-mixed nonylphenyl) phosphite, tris(2,4-di-t-butylphenyl) phosphite, octyldiphenyl phosphite, tetra(C₁₂₋₁₅ mixed alkyl)bisphenol A diphosphite, tetra(tridecyl)-4,4'-butylidenebis(3-methyl-6-t-butylphenol) diphosphite, hexa(tridecyl)-1,1,3-tris-(2-methyl-5-t-butyl-4-hydroxyphenylbutane triphosphite, bis(nonylphenyl)pentaerythritol diphosphite, phenyl bisphenol A pentaerythritol diphosphite, bis(2,4-di-t-butylphenylpentaerythritol diphosphite and bis(2,6-di-t-butyl-4-methylphenyl)pentaerythritol diphosphite.

Examples of the thioether series antioxidant include a dialkyl thiodipropionate compound, such as dilauryl, dimyristyl or distearyl thiodipropionate, pentaerythritol tetra (dodecyl thiopropionate), and an ester of an alkyl (C₈₋₁₈) thiopropionic acid with a monohydric to hexahydric alcohol or phenol compound, such as 4,4'-thiobis(6-t-butyl-m-cresol) bis(C₁₂₋₁₅ alkylthiopropionate).
The antioxidants may be used solely or as a combination of two or more kinds thereof.

### Other Chemicals for Rubber

In addition to the antioxidant, wax, stearic acid, a resin and the like may be used as the other chemicals for rubber in the present invention.
The wax may be referred to as a sun cracking preventing agent, and has a function of preventing cracking of rubber generated by the action of sunlight or ozone. Specifically, the wax blooms on the surface of rubber after vulcanization to block the surface of rubber from the air and reflects sunlight, thereby exhibiting the function thereof.
Stearic acid is an activating agent for an acidic vulcanization accelerator used in natural rubber, synthetic rubber, latex and the like, and has a function of suppressing premature cure to a basic vulcanization accelerator. Stearic acid is also effective as a softening agent, and particularly in the case where a large amount of an ingredient, such as carbon black, is used, stearic acid functions as a dispersant that improves the dispersibility of the ingredient.
Examples of the resin used include a phenol resin and an alicyclic hydrocarbon resin, which may be used for the purpose of increasing the elasticity of rubber and enhancing the viscoelasticity of rubber.

Specific examples of the kind of the phenol resin include a novolak type and a resol type, and in general, a novolak type may be favorably used. The phenol resin may be an alkyl-substituted type and may be modified with tall oil, cashew oil or the like.
Depending on necessity, hexamethylenetetramine, hexamethoxymethylmelamine and the like, which are methylene donating agents, may be added as a curing agent.
Specific examples of the novolak type include Sumilite Resin Model PR-50731 (melting point: 95°C) as a straight phenol resin, Sumilite Resin Model PR-19900 (melting point: 80°C) as an alkyl-substituted phenol resin, Sumilite Resin Model PR-12636 (melting point: 70°C) as a cashew-modified phenol resin, Sumilite Resin Model PR-133491 (melting point: 73°C) as an oil-modified phenol resin, which are all commercially available products of Sumitomo Bakelite Co., Ltd.
The alicyclic hydrocarbon resin is a petroleum resin formed mainly from cyclopentadiene or dicyclopentadiene, and examples thereof include a copolymer of cyclopentadiene or dicyclopentadiene and a copolymerizable olefinic hydrocarbon, and a polymer of cyclopentadiene and/or dicyclopentadiene, to which a hydroxyl group, an ester, maleic acid, ethylidene norbornene, and the like may be added.
Specific examples of commercially available products thereof include Quintone 1325 and 1345, produced by Nippon Zeon Corporation, and NeoResins, produced by Nippon Petrochemicals Co., Ltd.
The resins may be used solely or as a combination of two or more kinds thereof.

### Method for producing White Turbid Dispersion Liquid of Chemical for Rubber

In the method for producing the white turbid dispersion liquid of a chemical for rubber of the present invention, a solution containing the chemical for rubber dissolved in a good solvent for the chemical for rubber is mixed with a poor solvent for the chemical for rubber, thereby producing the white turbid dispersion liquid of a chemical for rubber.
Specifically, a prescribed chemical for rubber is dissolved in a good solvent thereto, thereby preparing a solution of the chemical for rubber having a concentration of generally 1% by mass or more, preferably from 1 to 60% by mass, more preferably from 1 to 40% by mass, and further preferably from 3 to 40% by mass. Subsequently, 100 parts by mass of the solution of the chemical for rubber is mixed with approximately from 5 to 400 parts by mass, and preferably from 20 to 200 parts by mass, of a poor solvent to the chemical for rubber, thereby producing the white turbid dispersion liquid of the chemical for rubber. The method of mixing the solution of the chemical for rubber and the poor solvent is not particularly limited, and such a method may be generally employed that the poor solvent is added to the solution of the chemical for rubber under stirring.
In the production method of the present invention, the mixing ratio of the good solvent and the poor solvent (mass of good solvent/mass of poor solvent) is preferably from 99/1 to 1/99, more preferably from 95/5 to 50/50, and particularly preferably from 92/8 to 70/30.

The good solvent and the poor solvent mean solvents having solubility measured in the following manner.
To 5 g of a chemical for rubber to be measured, a solvent to be measured for solubility is added to make 100 g, and the mixture is stirred at a temperature 25°C. A solvent that provides a transparent solution is designated as the good solvent to the chemical for rubber, and a solvent that causes white turbidity or separation is designated as the poor solvent to the chemical for rubber.

Specific examples of the good solvent in the present invention include methyl ethyl ketone, toluene, diethyl ether and kerosene.
Specific examples of the poor solvent in the present invention include water and hydroalcohol.

The wet master batch containing a chemical for rubber of the present invention will be described.

### Rubber Wet Master Batch containing Chemical for Rubber

The rubber wet master batch containing a chemical for rubber of the present invention (which may be hereinafter referred simply to as a wet master batch) obtained by coagulating a liquid mixture containing the white turbid dispersion liquid of a chemical for rubber of this invention, and a rubber latex, or a rubber latex and a filler slurry.

### Rubber Latex

Examples of the rubber latex used in the wet master batch of the present invention include a natural rubber latex and/or a synthetic rubber latex.
Examples of the natural rubber latex used include a field latex, an ammonia-treated latex, a centrifugally concentrated latex, a deproteinized latex treated with an enzyme, and combinations thereof.
Examples of the synthetic rubber latex include latices of styrene-butadiene polymer rubber, nitrile rubber and polychloroprene rubber.
The rubber concentration in the rubber latex is generally approximately from 5 to 70% by mass, and preferably from 15 to 40% by mass. The rubber latex may be diluted with water or the like.

### Filler Slurry

Examples of the filler slurry that may be used in the wet master batch of the present invention include a slurry containing at least one kind of a filler selected from carbon black, silica and an inorganic filler represented by the general formula (I) dispersed in a dispersion solvent with a high-speed shearing mixer:

nM·xSiO_{y}·zH₂O (I)

wherein M represents at least one selected from a metal selected from aluminum, magnesium, titanium, calcium and zirconium, an oxide and a hydroxide of the metals, a hydrate thereof, and a carbonate salt of the metals; and n, x, y and z are an integer of from 1 to 5, an integer of from 0 to 10, an integer of from 2 to 5, and an integer of from 0 to 10, respectively.
The carbon black used may be one that is ordinarily used in the rubber industry. For example, carbon black of various grades, such as SAF, HAF, ISAF, FEF and GPF, may be used solely or as a mixture thereof.
The silica is not particularly limited and is preferably precipitated silica , fumed silica or colloidal silica. These may be used solely or as a mixture thereof.

Specific examples of the inorganic filler represented by the general formula (I) include alumina (Al₂O₃), such as γ-alumina and α-alumina, alumina hydrate (Al₂O₃·H₂O), such as boehmite and diaspore, aluminum hydroxide [Al(OH)₃], such as gibbsite and bayerite, aluminum carbonate [Al₂(CO₃)₂], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (such as Al₂SiO₅ and Al₄·3SiO₄·5H₂O), magnesium silicate (such as Mg₂SiO₄ and MgSiO₃), calcium silicate (such as Ca₂·SiO₄), aluminum calcium silicate (such as Al₂O₃·CaO·2SiO₂), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate containing hydrogen, an alkali metal or an alkaline earth metal compensating the charge, such as various kinds of zeolite.
The inorganic filler represented by the general formula (I) is preferably ones, in which M is at least one selected from metallic aluminum, an oxide or hydroxide of aluminum, a hydrate thereof, and a carbonate salt of aluminum.

Examples of the high-speed shearing mixer used in the preparation of the slurry in the present invention include a high-speed shearing mixer having a rotor and a stator, a high-pressure homogenizer, an ultrasonic homogenizer and a colloid mill.

As the characteristics of the slurry, it is preferred that (i) the particle size distribution of the filler in the slurry has a volume average particle diameter (mv) of 25 µm or less and a 90% by volume particle diameter (D90) of 30 µm or less, and it is preferred that (ii) the dried filler recovered from the slurry has a 24M4DBP oil absorption that maintains 93% or more of the 24M4DBP oil absorption before dispersing in the dispersion solvent. The 24M4DBP oil absorption herein is a value measured according to ISO 6894.
It is more preferred that the volume average particle diameter (mv) is 20 µm or less, and the 90% by volume particle diameter (D90) is 25 µm or less. When the particle size is too large, the dispersion state of the filler in the rubber may be deteriorated to impair the reinforcing property and the wear resistance in some cases. The measurement method of the particle size distribution of the filler in the slurry will be described later.

Upon applying an excessive shearing force to the slurry for attempting to reduce the particle size, there is a possibility that the structure of the filler is broken, which causes reduction of the reinforcing property. The 24M4DBP oil absorption of the filler recovered from the slurry is preferably 93% or more of the 24M4DBP oil absorption before dispersing in the dispersion solvent, and more preferably 96% or more thereof.
The concentration of the filler in the slurry is preferably from 1 to 30% by mass, and particularly preferably in a range of from 2 to 20% by mass. When the concentration of the filler is less than 1% by mass, the necessary volume of the slurry may be too large, and when it exceeds 30% by mass, the slurry may have too large viscosity, which may cause an operational problem.
In the present invention, the slurry is preferably a water dispersed slurry from the standpoint of the mixing property in the case where a rubber latex is used.

### Production of Wet Master Batch

In the production of the wet master batch in the present invention, the order of mixing the liquids is not particularly limited. For example, the white turbid dispersion liquid of a chemical for rubber of the present invention (A) and the rubber latex (B), or the rubber latex (B) and the filler slurry (C) are mixed to prepare a liquid mixture. Examples of the preparation method of the liquid mixture containing the component (A) and the component (B) include a method of adding the component (A) dropwise to the component (B) under stirring having been placed in a stirring vessel equipped with a stirring blade, and inversely a method of adding the component (B) dropwise to the component (A) under stirring.
Examples of the preparation method of the liquid mixture containing the component (A), the component (B) and the component (C) include a method of adding a liquid mixture of the component (A) and the component (B) prepared according to the above dropwise to the component (C) under stirring having been placed in a stirring vessel equipped with a stirring blade, and inversely a method of adding the component (C) to the liquid mixture of the component (A) and the component (B) under stirring. Furthermore, such a method may also be employed that a stream of the component (C) and a stream of the liquid mixture containing the component (A) and the component (B) with a prescribed flow rate ratio are mixed under vigorous hydraulic stirring condition.

The liquid mixture containing the components thus obtained is coagulated to form a coagulum. The coagulation may be performed by a known method, for example, with a coagulating agent, such as an acid, e.g., formic acid and sulfuric acid, or a salt, such as sodium chloride. The coagulation may also be performed by heating or applying a mechanical shearing force, and these may be employed in combination.
The coagulum is taken out by a generally known solid-liquid separation method, and is sufficiently rinsed and then dried. The drying may be performed with an ordinary dryer, such as a vacuum dryer, an air dryer, a drum dryer and a band dryer, and for further enhancing the dispersibility of the filler, it is preferred to dry under application of a mechanical shearing force.

In the wet master batch thus obtained, the content of the chemical for rubber is generally approximately from 0.2 to 20 parts by mass, and preferably from 0.5 to 15 parts by mass, per 100 parts by mass of the rubber component. In the case where the filler slurry is used, the content of the filler is generally approximately from 20 to 500 parts by mass, and preferably from 30 to 80 parts by mass, per 100 parts by mass of the rubber component.
The wet master batch of the present invention is produced with a chemical for rubber in the form of the white turbid dispersion liquid of the chemical for rubber, and therefore, the chemical for rubber is present in the wet master batch in a considerably good dispersion state.
The use of the wet master batch of the present invention in a rubber composition provides a rubber composition that is enhanced in thermal aging resistance, reinforcing property, elastic modulus, wear resistance and the like.

The rubber composition of the present invention will be described.

### Rubber Composition

The rubber composition of the present invention is obtained by mixing the rubber wet master batch containing a chemical for rubber of the present invention. The rubber composition may contain various chemicals that are ordinarily used in the rubber industry, such as other rubber components, a filler, an antioxidant, a vulcanizing agent, a vulcanization accelerator, zinc flower, a scorch retarder and stearic acid, in such a range that does not impair the advantages of the present invention. Examples of the filler used include carbon, silica and other various filler, which are ordinarily used in rubber mixtures. In the case where the amount of the filler and/or the chemical for rubber in the wet master batch used is sufficient, and the chemical for rubber may not necessarily be further added, the chemical for rubber may not be added.
The rubber composition preferably contains the rubber component in the wet master batch in an amount of 20% by mass or more based on the total rubber component. Examples of the other rubber components used for adding to the wet master batch include ordinary natural rubber and diene synthetic rubber, and examples of the diene synthetic rubber include a styrene-butadiene copolymer (SBR), polybutadiene (BR), polyisoprene (IR), butyl rubber (IIR), an ethylene-propylene copolymer, and mixtures thereof.
The rubber composition of the present invention may be applied to a tire, and also to other industrial products, such as antivibration rubber, a belt and a hose. The rubber composition is particularly preferably used for rubber for a tire, and may be applied to any of tire members, such as tread rubber, side rubber, ply coating rubber, bead filler rubber and belt coating rubber.

The present invention also provides a tire containing the rubber composition of the present invention.

### Tire

The tire of the present invention may be produced with the rubber composition of the present invention by an ordinary method. Specifically, the rubber composition, which contains the wet master batch and the various chemicals depending on necessity, in an unvulcanized state is processed into a tire tread, and attached and molded on a tire molding machine by a known method, thereby molding an unvulcanized tire. The unvulcanized tire is applied with heat and pressure in a vulcanizing machine, thereby providing a tire.
The tire of the present invention thus obtained is excellent in thermal aging resistance, reinforcing property, elastic modulus, wear resistance and the like.

### Example

The present invention will be described in more detail with reference to examples, but the present invention is not limited to the examples.
The measurements in Examples and Comparative Examples were performed in the following manners. (1) Volume Average Particle Diameter (mv) of Particles of Chemical for Rubber in White Turbid Dispersion Liquid of Chemical for Rubber
The measurement was performed by using a laser diffraction particle size distribution meter (Microtrac Model FRA) with water as a solvent (refractive index: 1.33). The particle refractive index used was 1.57 in all the measurements.

### (2) Ratio of Chemical for Rubber in Particle Form to Total Chemical for Rubber in White Turbid Dispersion Liquid of Chemical for Rubber

The white turbid dispersion liquid of a chemical for rubber was filtered with Whatman qualitative filter paper No. 4 at a temperature 25°C, rinsed with water, then dried, and measured for the mass B thereof. The total mass A of the chemical for rubber in the dispersion liquid used was calculated from the charge amount of the chemical for rubber, and the value (B/A) x 100 was obtained.

### (3) Particle Size Distribution of Filler in Slurry (Volume Average Particle Diameter (mV), 90% by Volume Particle Diameter (D90))

The particle size distribution was measured in the same manner as in the item (1) above. For preventing the filler from being reaggregated, the measurement was performed immediately after dispersion.

### (4) 24M4DBP Oil Absorption

The measurement was performed according to ISO 6894.

### (5) Content of Chemical for Rubber in Master Batch

The antioxidant was measured therefor according to JIS K6220-3:(2001).

The resin was measured therefor by a gas chromatography method after extracting with chloroform.

### (6) Lambourn Wear Resistance Test (Wear Resistance)

The wear amount was measured with a slip ratio of 40% at room temperature by using a Lambourn wear resistance tester, and the reciprocal thereof was expressed as an index with the rubber composition of Comparative Example 4 (before thermal aging) as 100. A larger value means a smaller mass decrease and better wear resistance.

### (7) Thermal Aging Test (Breaking Strength Retention)

A rubber composition obtained by mixing and vulcanizing immediately after producing a master batch and a rubber composition obtained by mixing and vulcanizing after leaving to stand at 40°C for one month were measured for breaking strength, and the breaking strength retention was calculated and expressed as an index with the rubber composition of Comparative Example 4 as 100. A larger number means a better breaking strength retention.

### (8) Rebound resilience

The measurement was performed according to JIS K6255 with a Tripso rebound resilience tester, and the result was expressed as an index with Comparative Example 4 as 100. A larger index means a better result.

### Example 1

### Preparation of White Turbid Dispersion Liquid containing Antioxidant 6C and Production of Rubber Wet Master Batch (1) Preparation of White Turbid Dispersion Liquid containing Antioxidant 6C

An antioxidant 6C (N-(1,3-dimethylbutyl)-N'-phenyl-p-phenylenediamine, "Ozonone 6C", produced by Seiko Chemical Co., Ltd.) was dissolved in ethanol as a good solvent, thereby preparing a 6C solution having a concentration of 10% by mass. Subsequently, the same amount of water as a poor solvent was added to the 6C solution under stirring, and the mixture was stirred at 25°C for 10 minutes, thereby preparing a white turbid dispersion liquid containing 6C having a 6C concentration of 5% by mass.
In the white turbid dispersion liquid containing 6C, 96% by mass of the total 6C was dispersed in the form of particles, and the particles had a volume average particle diameter (mv) of 1.7 µm.

### (2) Production of Wet Master Batch

A natural rubber latex having a rubber concentration of 20% by mass and the white turbid dispersion liquid containing 6C having a 6C concentration of 5% by mass obtained in the item (1) above were mixed under stirring at a ratio of the rubber component and 6C of 100/1.2 by mass, and continuously stirred at a temperature of 25°C for 10 minutes. Subsequently, the mixture was coagulated by controlling the pH to 4.7 through addition of formic acid having a concentration of 10% by mass, and the coagulum was dehydrated, rinsed with water, and then dried at 110°C for 2 hours, thereby producing a wet master batch.
The operation of producing the wet master batch was repeated five times, and the content of 6C in the wet master batch was 0.95 part by mass on average (standard deviation: 0.013) per 100 parts by mass of the rubber component.

### Comparative Example 1

### Production of Dry Master Batch containing Rubber Component and Antioxidant 6C

100 parts by mass of a rubber component (natural rubber (TSR20)) and 1 part by mass of pellets of the aforementioned antioxidant 6C were kneaded by agitation with a mixer set at 80°C at 70 rpm for 2 minutes, thereby producing a dry master batch. The temperature after completing the kneading was 130°C.
The operation of producing the dry master batch was repeated five times, and the content of 6C in the dry master batch was 0.97 part by mass on average (standard deviation: 0.06) per 100 parts by mass of the rubber component.

### Example 2

### Preparation of White Turbid Dispersion Liquid containing Antioxidant RD and Production of Rubber Wet Master Batch (1) Preparation of White Turbid Dispersion Liquid containing Antioxidant RD

A white turbid dispersion liquid containing an antioxidant RD (Nonflex RD, produced by Seiko Chemical Co., Ltd., polymer of 2,2,4-trimethyl-1,2-dihydroquinoline) having an RD concentration of 5% by mass was prepared in the same manner as in the item (1) of Example 1 except that the antioxidant RD was used instead of the antioxidant 6C in the item (1) of Example 1.
In the white turbid dispersion liquid containing RD, 93% by mass of the total RD was dispersed in the form of particles, and the particles had a volume average particle diameter (mv) of 0.9 µm.

### (2) Production of Wet Master Batch

A wet master batch was produced in the same manner as in the item (2) of Example 1 using a natural rubber latex having a rubber concentration of 20% by mass and the white turbid dispersion liquid containing RD having an RD concentration of 5% by mass obtained in the item (1) above.
The operation of producing the wet master batch was repeated five times, and the content of RD in the wet master batch was 0.98 part by mass on average (standard deviation: 0.11) per 100 parts by mass of the rubber component.

### Comparative Example 2

### Dry Master Batch containing Rubber Component and Antioxidant RD

A dry master batch was produced in the same manner as in Comparative Example 1 except that the aforementioned antioxidant RD was used instead of the antioxidant 6C used in Comparative Example 1. The temperature after completing the kneading was 140°C.
The operation of producing the dry master batch was repeated five times, and the content of RD in the dry master batch was 0.94 part by mass on average (standard deviation: 0.27) per 100 parts by mass of the rubber component.

### Example 3

### Preparation of White Turbid Dispersion Liquid containing Phenol Resin and Production of Rubber Wet Master Batch

### (1) Preparation of White Turbid Dispersion Liquid containing Phenol Resin

A white turbid dispersion liquid containing a phenol resin (SP1006N, produced by Asahi Organic Chemicals Industry Co., Ltd.) having a phenol resin concentration of 5% by mass was prepared in the same manner as in the item (1) of Example 1 except that the phenol resin was used instead of the antioxidant 6C in the item (1) of Example 1.
In the white turbid dispersion liquid containing a phenol resin, 92% by mass of the total phenol resin was dispersed in the form of particles, and the particles had a volume average particle diameter (mv) of 2.1 µm.

### (2) Production of Wet Master Batch

A wet master batch was produced in the same manner as in the item (2) of Example 1 except that a natural rubber latex having a rubber concentration of 20% by mass and the white turbid dispersion liquid containing a phenol resin having a phenol resin concentration of 5% by mass obtained in the item (1) above were used at a ratio of the rubber component and the phenol resin of 100/5.3 by mass.
The operation of producing the wet master batch was repeated five times, and the content of the phenol resin in the wet master batch was 4.92 part by mass on average (standard deviation: 0.16) per 100 parts by mass of the rubber component.

### Comparative Example 3

A dry master batch was produced in the same manner as in Comparative Example 1 except that 5 parts by mass of the aforementioned phenol resin was used instead of 1 part by mass of the antioxidant 6C used in Comparative Example 1. The temperature after completing the kneading was 140°C.
The operation of producing the dry master batch was repeated five times, and the content of the phenol resin in the dry master batch was 4.46 part by mass on average (standard deviation: 0.81) per 100 parts by mass of the rubber component.

### Example 4-1

### (1) Preparation of White Turbid Dispersion Liquid containing Antioxidant 6C

An antioxidant 6C (Nocrac 6C, produced by Ouchi Shinko Chemical Industrial Co., Ltd.) was dissolved in ethanol, thereby preparing a 6C solution having a concentration of 20% by mass. Subsequently, the same amount of water was added to the 6C solution under stirring, and the mixture was stirred at 25°C for 10 minutes, thereby preparing a white turbid dispersion liquid containing 6C having a 6C concentration of 10% by mass.
In the white turbid dispersion liquid containing 6C, 97% by mass of the total 6C was dispersed in the form of particles, and the particles had a volume average particle diameter (mv) of 1.6 µm.

### (2) Preparation of Carbon Black Slurry

Carbon black N220 (#80, produced by Asahi Carbon Co., Ltd.) was placed in water and finely dispersed with "Highshear Mixer", produced by Silverson at 3,000 rpm for 20 minutes, thereby preparing a carbon black slurry having a concentration of 5% by mass. The carbon black in the slurry had mv of 6.2 µm, D90 of 10.0 µm and a 24M4DBP retention of 97%.

### (3) Production of Wet Master Batch

A natural rubber latex having a rubber concentration of 20% by mass and the white turbid dispersion liquid containing 6C having a 6C concentration of 10% by mass obtained in the item (1) were mixed under stirring at a ratio of the rubber component and 6C of 100/1.2 by mass.
The liquid mixture and the carbon black slurry having a concentration of 5% by mass obtained in the item (2) were then mixed at a ratio of the rubber component and the carbon black of 100/45 by mass, and the mixture was stirred at room temperature (25°C) for 15 minutes. Subsequently, the liquid mixture was coagulated by controlling the pH to 4.7 through addition of formic acid having a concentration of 10% by mass, and the coagulum was dehydrated, rinsed with water, and then dried at 110°C for 2 hours, thereby producing a wet master batch.
The operation of producing the wet master batch was repeated five times, and the content of 6C in the wet master batch was 0.98 part by mass on average (standard deviation: 0.03) per 100 parts by mass of the rubber component.

### (4) Preparation of Rubber Composition

A rubber composition having the formulation shown in Table 1 was prepared by using the wet master batch obtained in the item (3) with a Banbury mixer.
The rubber composition was vulcanized at 150°C for 30 minutes, thereby preparing a test specimen, which was evaluated for performance. The results are shown in Table 1.

### Example 4-2

### (1) Production of Wet Master Batch

The carbon black slurry having a concentration of 5% by mass obtained in the item (2) of Example 4-1 and the white turbid dispersion liquid containing 6C having a concentration of 10% by mass obtained in the item (1) of Example 4-1 were mixed under stirring at a ratio of the carbon black and 6C of 45/1.2 by mass.
The liquid mixture and a natural rubber latex having a rubber concentration of 20% by mass were then mixed at a ratio of the rubber component, the carbon black and 6C of 100/45/1.2 by mass, and the mixture was stirred at room temperature (25°C) for 15 minutes. Subsequently, the liquid mixture was coagulated by controlling the pH to 4.7 through addition of formic acid having a concentration of 10% by mass, and the coagulum was dehydrated, rinsed with water, and then dried at 110°C for 2 hours, thereby producing a wet master batch.
The operation of producing the wet master batch was repeated five times, and the content of 6C in the wet master batch was 0.97 part by mass on average (standard deviation: 0.04) per 100 parts by mass of the rubber component.

### (2) Preparation of Rubber Composition

A rubber composition having the formulation shown in Table 1 was prepared by using the wet master batch obtained in the item (1) with a Banbury mixer.
The rubber composition was vulcanized at 150°C for 30 minutes, thereby preparing a test specimen, which was evaluated for performance. The results are shown in Table 1.

### Example 4-3

### (1) Production of Wet Master Batch

A natural rubber latex having a rubber concentration of 20% by mass and the carbon black slurry having a concentration of 5% by mass obtained in the item (2) of Example 4-1 were mixed at a ratio of the rubber component and the carbon black of 100/45 by mass, and the mixture was stirred at room temperature (25°C) for 15 minutes.
The liquid mixture and the white turbid dispersion liquid containing 6C having a concentration of 10% by mass obtained in the item (1) of Example 4-1 were mixed under stirring at a ratio of the rubber component and 6C of 100/1.2 by mass. Subsequently, the liquid mixture was coagulated by controlling the pH to 4.7 through addition of formic acid having a concentration of 10% by mass, and the coagulum was dehydrated, rinsed with water, and then dried at 110°C for 2 hours, thereby producing a wet master batch.
The operation of producing the wet master batch was repeated five times, and the content of 6C in the wet master batch was 0.98 part by mass on average (standard deviation: 0.04) per 100 parts by mass of the rubber component.

### (2) Preparation of Rubber Composition

A rubber composition having the formulation shown in Table 1 was prepared by using the wet master batch obtained in the item (1) with a Banbury mixer.
The rubber composition was vulcanized at 150°C for 30 minutes, thereby preparing a test specimen, which was evaluated for performance. The results are shown in Table 1.

### Comparative Example 4

### (1) Production of Dry Master Batch

100 parts by mass of the aforementioned rubber component (TSR20), 45 parts by mass of the aforementioned carbon black N220 and 1 part by mass of pellets of the aforementioned antioxidant 6C (Nocrac 6C) were kneaded by agitation with a mixer set at 80°C at 70 rpm for 2 minutes, thereby producing a dry master batch.
The operation of producing the dry master batch was repeated five times, and the content of 6C in the dry master batch was 0.94 part by mass on average (standard deviation: 0.28) per 100 parts by mass of the rubber component.

### (2) Preparation of Rubber Composition

A rubber composition having the formulation shown in Table 1 was prepared by using the dry master batch obtained in the item (1) with a Banbury mixer.
The rubber composition was vulcanized at 150°C for 30 minutes, thereby preparing a test specimen, which was evaluated for performance. The results are shown in Table 1.

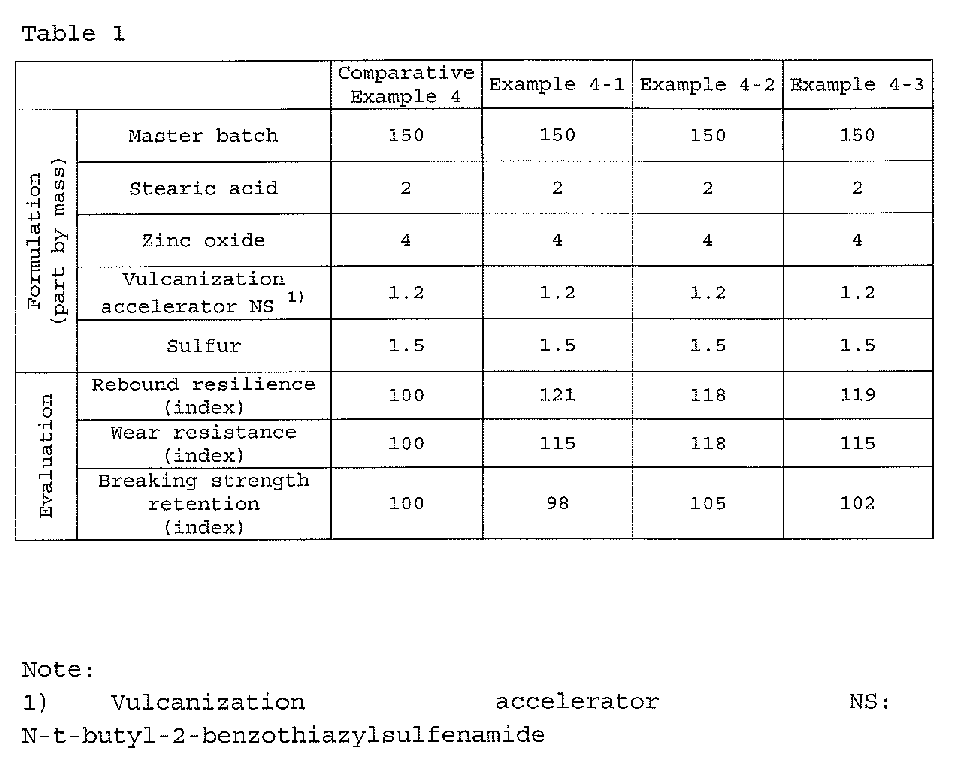

It is understood from the results that the white turbid dispersion liquid of a chemical for rubber of the present invention provides a wet master batch that has a stable composition. It is also understood from Table 1 that the rubber composition using the wet master batch of the present invention is excellent in wear resistance and rebound resilience as compared to the rubber composition using the dry master batch of Comparative Example, and has a good breaking strength retention depending on the preparation method of the master batch.

### Industrial Applicability

The white turbid dispersion liquid of a chemical for rubber of the present invention may be favorably used for a wet master batch that provides a rubber composition enhanced in thermal aging resistance, reinforcing property, elastic modulus, wear resistance and the like.

## Claims

1. A white turbid dispersion liquid of a chemical for rubber, comprising the chemical for rubber at a concentration of 1% by mass or more.

2. The white turbid dispersion liquid of a chemical for rubber according to claim 1, wherein 80% by mass or more of the chemical for rubber is dispersed in a form of particles.

3. The white turbid dispersion liquid of a chemical for rubber according to claim 1 or 2, wherein particles of the chemical for rubber in the dispersion liquid have a volume average particle diameter of from 0.4 to 20 µm.

4. The white turbid dispersion liquid of a chemical for rubber according to any one of claims 1 to 3, wherein the content of the chemical for rubber is from 1 to 60% by mass.

5. The white turbid dispersion liquid of a chemical for rubber according to any one of claims 1 to 4, wherein the chemical for rubber is at least one selected from an antioxidant, wax, stearic acid and a resin.

6. A method for producing the white turbid dispersion liquid of a chemical for rubber according to any one of claims 1 to 5, comprising mixing a solution containing a chemical for rubber dissolved in a good solvent for the chemical for rubber, with a poor solvent for the chemical for rubber.

7. A rubber wet master batch containing a chemical for rubber, obtained by coagulating a liquid mixture containing the white turbid dispersion liquid of a chemical for rubber according to any one of claims 1 to 5, and a rubber latex, or a rubber latex and a filler slurry.

8. The rubber wet master batch containing a chemical for rubber according to claim 7, wherein the coagulated liquid mixture is dried.

9. A rubber composition comprising the rubber wet master batch containing a chemical for rubber according to claim 8.

10. A tire comprising the rubber composition according to claim 9.
